# EUROPEAN PATENT SPECIFICATION

(11) **EP 1 396 366 B1**
(45) Date of publication and mention of the grant of the patent: **25.10.2006**
(21) Application number: 03019297.5
(22) Date of filing: 26.08.2003
(51) Int. Cl.: B60K 5/02, B62K 27/02

(54) **Snowmobile**
Schneemobil
Motoneige

(30) Priority: 27.08.2002 JP 2002246408
(43) Date of publication of application: 10.03.2004
(73) Proprietor: YAMAHA HATSUDOKI KABUSHIKI KAISHA, Iwata-shi, Shizuoka-ken (JP)
(72) Inventor: Yamamoto, Masanobu, Iwata-shi Shizuoka-ken (JP)
(74) Representative: Grünecker, Kinkeldey, Stockmair & Schwanhäusser Anwaltssozietät

(56) References cited:
- US-A- 5 014 812
- US-A1- 2002 000 340
- US-A1- 2002 100 631

## Description

The present invention relates to a snowmobile comprising a vehicle body holding a driving means placeable on a running surface and an internal combustion engine interlocked with the driving means, wherein the internal combustion engine is provided with a crankcase for supporting a crankshaft, and a cylinder extended from this crankcase.

Such a snowmobile is for example disclosed in JP-A-5-229474. The snowmobile disclosed therein includes: driving means placed on a running surface while being held by a rear part of a vehicle body for making, by rotating, the vehicle body capable of driving; an orientation ski placed on the running surface while being supported by a front part of the vehicle body to be orientable for making, by orientating, the vehicle body orientable; and a for-driving four-cycle internal combustion engine held by a middle part of the fore-and-aft length of the vehicle body and interlocked with the driving means. Moreover, this internal combustion engine is provided with a crankcase held by the vehicle body for supporting a crankshaft, and a cylinder extruding from this crankcase.

By driving the internal combustion engine for transferring its driving force to the driving means, the driving means is accordingly driven and thereby, the snowmobile becomes able to run on the running surface.

The running surface on which a snowmobile runs is generally quite uneven. Thus, there has been a demand for improving the stability when the snowmobile is running. Further, assuming that the driving means for running tends to slip against the running surface when the snowmobile is running, the resulting running fails to satisfactorily respond to the driving force coming from the internal combustion engine. This reduces the ride comfort of the snowmobile and thus is not preferable.

Furthermore, the internal combustion engine includes: an air cleaner large in outer dimensions as a component of structuring an intake device therein; a water pump structuring a cooling device for cooling the internal combustion engine by cooling water; and a battery. The issue here is that, in the vehicle body having only a limited narrow redundant space, it is not easy to place, in a compact manner, the above-described components of the internal combustion engine such as the balancer shaft, air cleaner, water pump, and battery without impairing their each function.

US-A1-2002000340 discloses a snow mobile according to the preamble of claim 1.

In view of such circumstances, it is an object of the invention to improve the stability and ride comfort of a snowmobile as described above at the time of running.

The current invention solves this problem by providing a balancer shaft supported by the crankcase directly above the crankshaft and interlocked with the crankshaft by a gear type interlocking means

Accordingly, compared with a case of simply extruding the cylinder from the crankcase upward in the vertical direction, the center of gravity is lower in the internal combustion engine. In other words, the center of gravity of the snowmobile becomes lower, and thereby, the stability of the snowmobile is improved at the time of running.

Further, since the cylinder is made extruded upward from the crankcase towards the rear, the center of the gravity of the internal combustion engine is brought closer to the side of the driving means locating therebehind. Thereby, the snowmobile held by the driving means is increased in weight to a greater degree.

This resultantly increases friction of the driving means with respect to the running plane at the time of running. Thus, the snowmobile can suitably run according to the driving force output from the internal combustion engine, and the ride comfort of the snowmobile can be accordingly improved.

Preferably a balancer shaft supported by the crankcase and interlocked with the crankshaft is provided directly above the crankshaft.

In the above case, by providing a balancer shaft rotating in such a manner as to synchronize with the crankshaft, it becomes possible to suppress oscillations to be generated due to the primary couple of the internal combustion engine itself, thereby further improving the ride comfort of the snowmobile.

Here, as already described in the foregoing, the cylinder is extruding upward from the crankcase towards the rear. Thus, there exists a redundant space above and towards the front of the front surface of the cylinder. Utilizing the redundant space directly above the crankshaft, the balancer shaft is fitly placed. Placing the balancer shaft directly above the crankshaft in this way eliminates the need for lifting upward the heavy crankshaft, and the piston and the interlock rod connected thereto for the purpose of securing the space to be occupied by the balancer shaft.

Thus, even with the balancer shaft provided, the center of the gravity remains low in the snowmobile, improving the stability of the snowmobile when running.

Further preferably, the internal combustion engine includes an air cleaner to be interlocked with the cylinder, the air cleaner is provided toward above or front of a front surface of the cylinder.

With such a structure, it becomes possible to place the components of the internal combustion engine in a compact manner without impairing their each function.

In the snowmobile in which the internal combustion engine includes a carburetor coupled to the cylinder and the air cleaner, the carburetor and the air cleaner is provided above and towards the front of the front surface of the cylinder.

With such a structure, the redundant space above and towards the front of the front surface of the cylinder described above is effectively utilized for placement of the carburetor and the air cleaner large in outer dimensions. This allows the compact placement of the cylinder, the carburetor, and the air cleaner.

Here, the air cleaner is located above and towards the front of the cylinder. Thus, before heated by the cylinder, the running wind blown when the snowmobile runs is sucked in to the cylinder through the air cleaner. This is considered beneficial in terms of engine capability.

Further preferred embodiments are subject to the subclaims.

In the below, a preferred embodiment of the present invention is described by referring to the accompanying drawings, therein:

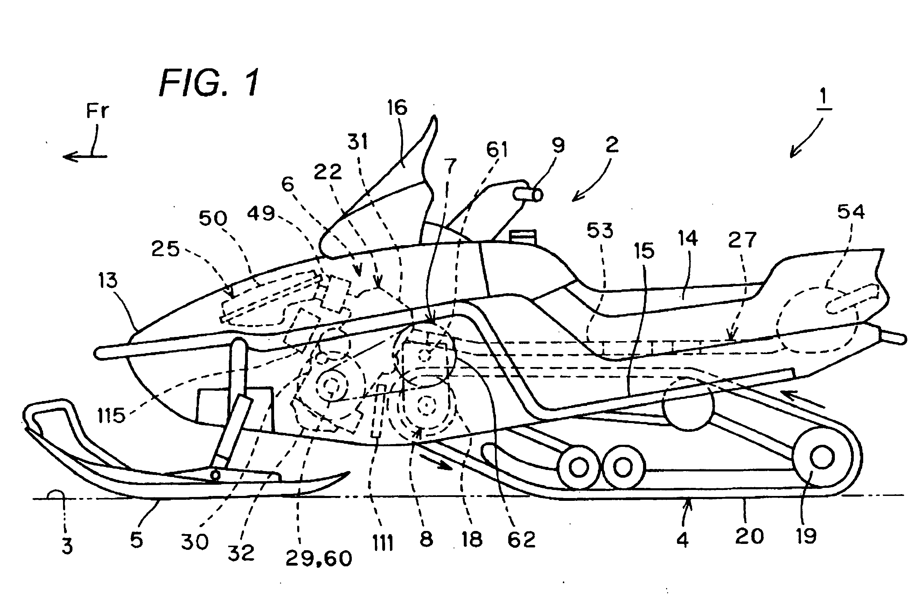

- FIG. 1: is a side view of a snowmobile in its entirety;

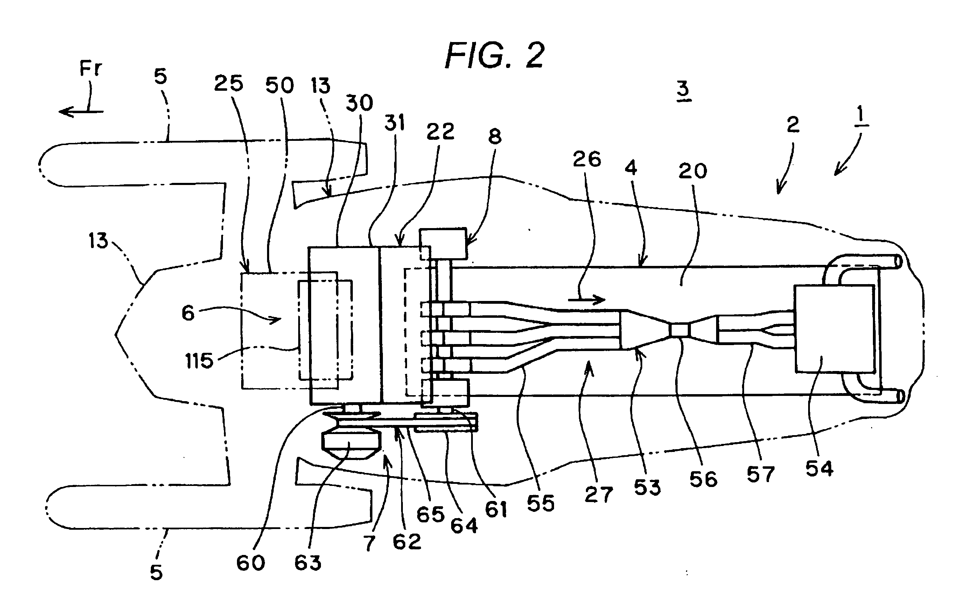

- FIG. 2: is a schematic diagram of a plane part of the snowmobile;

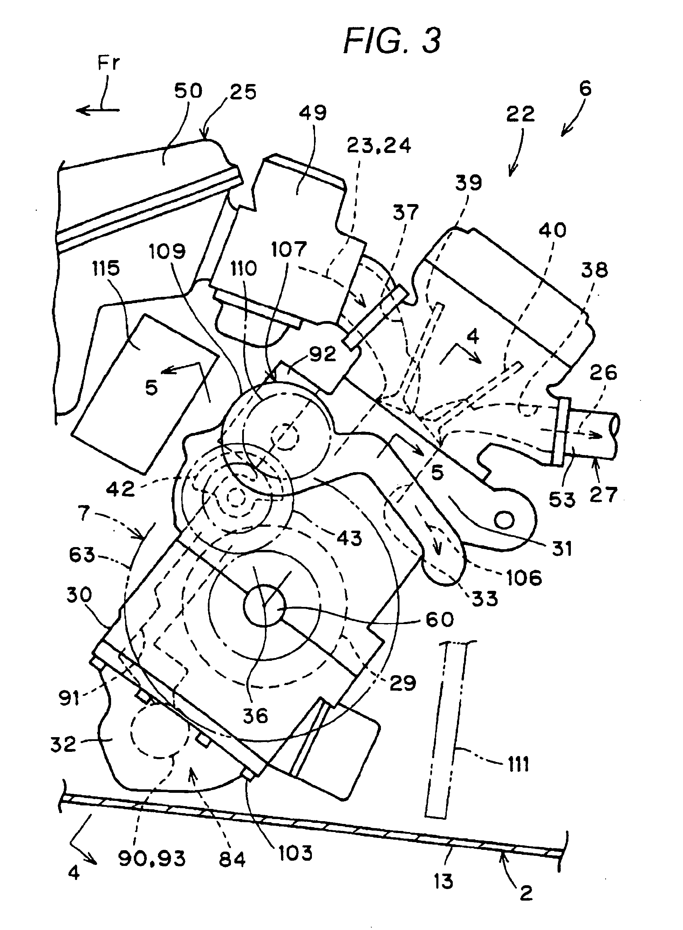

- FIG. 3: is a partially enlarged diagram of FIG. 1;

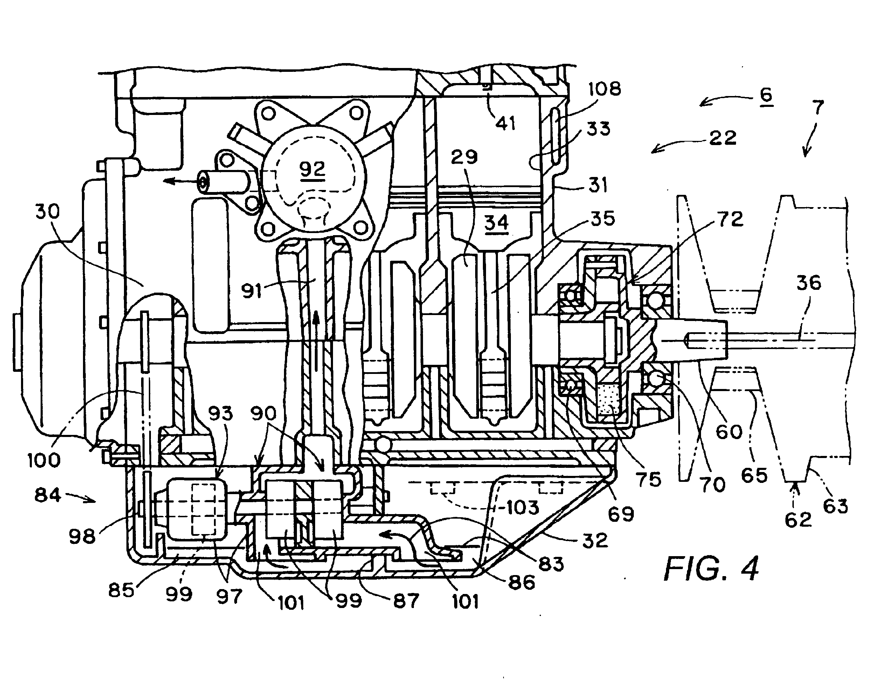

- FIG. 4: is a cross section view cut along a 4-4 line of FIG. 3;

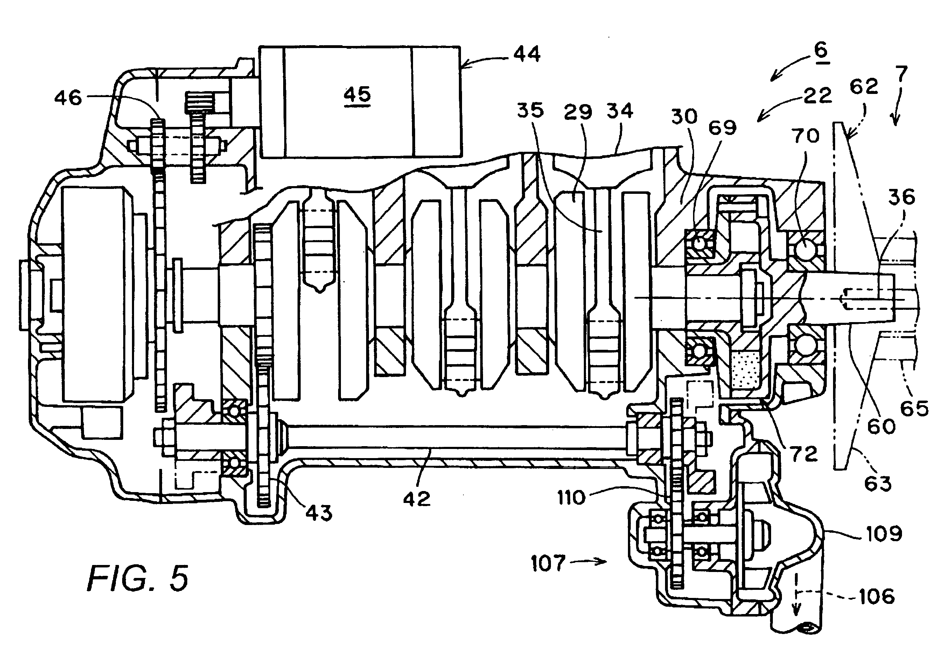

- FIG. 5: is a cross section view cut along a 5-5 line of FIG. 3;

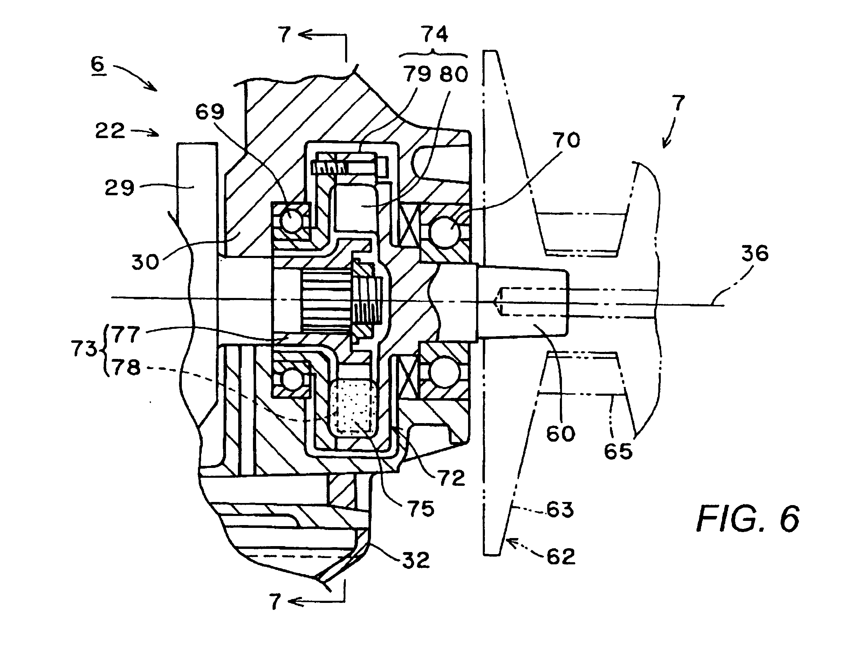

- FIG. 6: is a partially enlarged diagram of FIG. 4; and

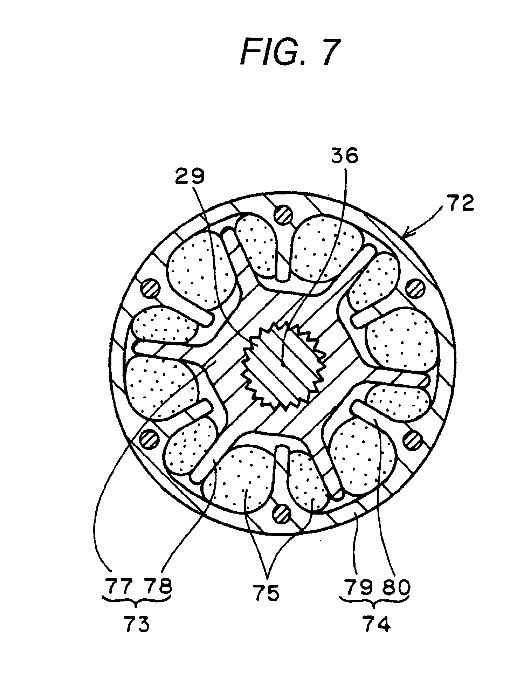

- FIG. 7: is a cross section view cut along a 7-7 line of FIG. 6.

In the drawings, a reference numeral 1 in the drawings is a saddle-provided conveyance, as an example thereof, a snowmobile is shown. Also, an arrow Fr in the drawings indicates a forward direction of the snowmobile 1.

The snowmobile 1 includes: driving means 4 placed on a running surface 3 being a snow plane while being held by the rear part of the vehicle body 2 for making, by rotating, the vehicle body 2 capable of running; a right-and-left pair of orientation skis 5 and 5 orientably supported by the front part of the vehicle body 2 and placed on the running surface 3 for making, by orientating, the vehicle body 2 orientable; a for-driving internal combustion engine 6 placed inside of a part in the middle of the fore-and-aft length of the vehicle body 2 and held thereby; an automatic various-speed transmission 7 to be interlocked with the internal combustion engine 6; and gear-type driveline equipment 8 for interlock with the driving means 4 while being interlocked with the transmission 7. That is, the driving means 4 and the internal combustion engine 6 are interlocked with each other via the transmission 7 and the driveline equipment 8. By the vehicle body 2, an orientation handle 9 to be interlocked with each of the orientation skis 5 is supported.

The vehicle body 2 includes: a vehicle main body 13 having a vehicle body frame being a framework thereof; a sheet 14 held by the vehicle main body 13 at the rear of the orientation handle 9 to allow a rider to seat thereon; a foot rest 15 provided to extrude from respective right and left sides of the vehicle main body 13 to allow the rider seated on the seat 14 to place his or her feet thereon; and a shield 16 provided and extruded so as to direct upward from the vehicle main body 13 in proximity to the front of the orientation handle 9.

The driving means 4 includes driving and follower rotation wheels 18 and 19, both of which are supported by the vehicle body 2 to be rotatable via a suspension system. A truck belt 20 is also included to be wound around these rotation wheels 18 and 19. The lower rear surface of the truck belt 20 extends almost horizontally to abut to the running plane 3.

The internal combustion engine 6 includes: an internal combustion engine body 22 being a four-cycle multi-cylinder (three-cylinder) engine to be held by the vehicle body 2; an intake device 25 for providing atmospheric air 23 and fuel 24 to the internal combustion engine body 22; and an exhaust device 27 for exhausting a combustion product 26 from the internal combustion engine body 22 onto the atmospheric side.

The internal combustion engine body 22 includes: a crankcase 30 held by the vehicle body 2 for supporting a crankshaft 29; a cylinder 31 extruding upward from the crankcase 30 towards the rear; an oil pan 32 provided in such a manner as to cover the lower surface side of the crankcase 30 from below; a piston 34 to be pushed into a cylinder hole 33 of the cylinder 31 to freely slide; and an interlock rod 35 for interlocking the crankshaft 29 and the piston 34 with each other. As to the crankshaft 29, a center axis 36 is extending straight in a direction across the vehicle 2 (lateral direction).

The internal combustion engine 6 includes: intake and exhaust paths 37 and 38 both provided at the extruding tip part of the cylinder 31 for making the cylinder hole 33 through inside and outside thereof; and intake and exhaust valves 39 and 40 for opening and closing the intake and exhaust paths 37 and 38; a move-valve mechanism (not shown) for opening and closing the intake and exhaust valves 39 and 40 as appropriate responding to the movement of the crankshaft 29; and a spark plug 41 whose discharge section is facing a combustion chamber provided at the upper end of the cylinder hole 33.

The internal combustion engine 6 includes: a balancer shaft 42 placed directly above the crankshaft 29 (in proximity of the upper part thereof) and extending horizontally to the crankshaft 29; gear-type interlock means 43 for interlocking the balancer shaft 42 with the crankshaft 29; and a startup device 44 for enabling the internal combustion engine 6 to start up through interlock with the crankshaft 29. The startup device 44 includes a startup motor 45 to be held by the cylinder 31, and gear-type interlock means 46 for interlocking the startup motor 45 with the crankshaft 29.

The intake device 25 includes: a carburetor 49 coupled to the front surface side of the cylinder 31 to be able to supply the atmospheric air 23 and the fuel 24 to the cylinder hole 33 via the intake path 37; and an air cleaner 50 for filtering the atmospheric air 23 for supply to the carburetor 49. The carburetor 49 and the rear part at least partially structuring the air cleaner 50 are placed above the front surface of the cylinder 31 and towards the front of the upper front surface of the cylinder 31, and the air cleaner 50 is placed above front of the balancer shaft 42.

The exhaust device 27 includes an exhaust pipe 53 extending from the cylinder 31 of the internal combustion engine 6 towards the rear, and a muffler 54 to be coupled to the extending tip part of the exhaust pipe 53. The exhaust pipe 53 includes: a plurality of (three) exhaust pipe members 55 structuring the front part of the exhaust pipe 53 and all extending from each of the cylinders of the internal combustion engine 6 towards the rear; a single assembly pipe 56 structuring a middle part of the fore-and-aft length of the exhaust pipe 53 to assemble the extruding tip parts of the exhaust pipe members 55; and a plurality of (two) other exhaust pipe members 57 and 57 structuring the rear part of the exhaust pipe 53 to draw the muffler 54 through the assembly pipe 56.

The transmission 7 includes: an input shaft 60 placed outside of one free end of the crankshaft 29 and on the center axis 36 sharing with the crankshaft 29 to be interlocked with the crankshaft 29; an output shaft 61 interlocked with the driving means 4 via the driveline equipment 8 for outputting a driving force to the driving means 4; and a belt-winding-type interlock means 62 for interlocking the input shaft 60 with the output shaft 62. This interlock means 62 includes: a driving pully 63 held by the input shaft 60 for rotating together therewith; a follower pully 64 held by the output shaft 61 for rotating together therewith; and a V belt 65 to be wound around the driving pully 63 and the follower pully 64. Here, as the input shaft 60 is increased in speed, the deceleration ratio is automatically reduced.

With respect to the crankshaft 29, the input shaft 60 is interlocked in the following manner. That is, one end of the input shaft 60 is held by the crankcase 30 in a cantilever manner by a right-and-left pair of bearings 69 and 70 to be rotatable about the center axis 36. As to the other end of the input shaft 60, the driving pully 63 is held thereby, and a base which is one end of the input shaft 60 is interlocked with one end of the crankshaft 29 via an damper 72. The damper 72 includes: a driving-side rotation body 73 held by the crankshaft 29 for rotation together therewith; a follower-side rotation body 74 formed on the base of the input shaft 60; and a rubber-made buffer member 75 provided between the driving-side rotation body 73 and the follower-side rotation body 74 for transferring the driving force therebetween while buffering the same.

The driving-side rotation body 73 includes a cylinder-shaped boss section 77 held by one end of the crankshaft 29 through spline engagement, and a plurality of extrusion bodies 78 extruding, from center to edge, outward in the radius direction from the boss section 77. On the other hand, the follower-side rotation body 74 is formed on the base of the input shaft and a box-shaped so as to cover the driving-side rotation body 73 and the buffer member 75 in their entirety from outside; and includes a casing 79 with its both ends held by the crankcase 30 with the respective bearings 69, 70 another extrusion body 80 provided inside of the casing 79 to be pushed into between the extrusion bodies 78 in a circumferential direction about the center axis 36. Between two extrusion bodies 78 and 80 next to each other in the circumferential direction, the buffer member 75 is provided.

A lubricating device 84 is provided for providing the internal combustion engine 6 with lubricity using lubricating oil 83. The lubricating device 84 includes an oil pan 32 for storing the lubricating oil 83 therein, and a regulatory wall 87 provided between one-side chamber 85 and an another-side chamber 86 locating inside of the oil pan 32 in the lateral direction of the vehicle body 2. This regulatory wall 87 is locating almost in the middle of the vehicle body 2 in the lateral direction, and regulates the flow of lubricating oil 83 between the chambers 85 and 86.

The lubricating device 84 includes: a right-and-left pair of oil pumps 90 and 90 being scavenging pumps for sucking out the lubricating oil 83 in the oil pan 32; an oil path 91 formed in the cylinder 31 and feeding the lubricating oil 83 sucked out by each of the oil pumps 90 to a lubricating oil tank (not shown) for storage therein; an oil cooler 92 attached to the front surface of the cylinder 31 and cooling the lubricating oil 83 suctioned by each of the oil pumps 90 through the oil path 91; and a supply oil pump 93 for supplying the lubricating oil 83 stored in the lubricating oil tank to every to-be-lubricated section in the internal combustion engine 6. The oil pump 90 is provided, respectively, to the one-side chamber 85 and the another-side chamber 86, that is, provided a right-and-left pair thereof as described above.

The oil pumps 90 and 93 each include: a pump casing 97 accommodated inside of the one-side chamber 85, which is one of the chambers 85 and 86, to structure the hull thereof, and coupled detachably to the lower surface of the crankcase 30 by a coupling member; a pump shaft 98 supported by each of the pump casings 97 to be rotatable about the center axis extending in the lateral direction of the vehicle body 2; and a rotor 99 accommodated in each of the pump casings 97 for rotating together with the corresponding pump shaft 98.

The pump casing 97 and the corresponding oil pump 90 are formed in a piece. A suction inlet 101 for suctioning the lubricating oil 83 into the pump casing 97 of each of the oil pumps 90 is provided two as a right-and-left pair. These suction inlets 101 are closed at the bottom of the one-side chamber 85 and the another-side chamber 86. The pump shafts 98 are formed in a piece on the same axis. The pump shafts 98 are interlocked with the crankshaft 29 by chain-wound-type interlock means 100, that is, the oil pumps 90 and 93 can be driven together with the internal combustion engine 6.

Through driving of the oil pumps 90 being scavenging pumps responding to driving of the internal combustion engine 6, the lubricating oil 83 inside of the oil pun 32 is sucked out and forwarded to the lubricating oil tank. On the other hand, through driving of the oil pump 93 being a supply pump, the lubricating oil 83 in the lubricating oil tank is supplied to every to-be-lubricated section in the internal combustion engine 6 for lubrication. The lubricating oil 83 after used for lubrication is returned back to the one-side chamber 85 and the another-side chamber 86 in the oil pan 32 by natural flow thereof.

With respect to the lower surface of the crankcase 30, the oil pan 32 is detachably coupled by the coupling member 103. Removing the oil pan 32 from the lower surface of the crankcase 30 will make the oil pumps 90 and 93 and the lower surface of the interlock means 100 extrude downward from the lower surface of the crankcase 30. This allows attach/detach operation of the interlock means 100 to/from the pump shaft 98, and maintenance and check operations with respect to the oil pumps 90 and 93 and the interlock member 100.

A cooler device 107 is provided for cooling the internal combustion engine 6 with cooling water 106. This cooling device 107 includes: a water jacket 108 formed to the cylinder 31 and the oil cooler 92; a water pump 109 provided above the crankshaft 29 to be held by the cylinder 31 for supplying the cooling water 106 to the water jacket 108; a gear-type interlock means 110 for interlocking the rotor of the water pump 109 with the balancer shaft 42; and a heat exchanger 111 provided in proximity of the rear part of the crankcase 30 for cooling the cooling water 106 which has been supplied to the water jacket 108 to cool therearound. In accordance with driving of the internal combustion engine 6, the water pump 109 cooperatively move via the balancer shaft 42 and the interlock means 110 to cool every section of the internal combustion engine 6.

A battery 115 is provided for supplying electricity to the spark plug 41 of the internal combustion engine 6, the startup motor 45 of the startup device 44, an engine control device (not shown), and the like. The rear parts at least partially structuring the air cleaner 50 and the battery 115, respectively, are provided above the front surface of the cylinder 31. Also, the battery 115 is placed in a space towards the front of the front surface of the cylinder 31, towards the front of the balancer shaft 42, and below the air cleaner 50. Further, the air cleaner 50 and the battery 115 are placed almost in the middle of the vehicle body 2 in the lateral direction to be held thereby.

Once the internal combustion engine 6 is started by cranking the crankshaft 29 using the startup motor 45 of the startup device 44, with respect to the cylinder 31, the air 23 is sucked in via the air cleaner 50, the carburetor 49, and the intake path 37 in the intake device 25 in this order. Also, the fuel 24 supplied from the carburetor 49 is sucked in, and the mixed gas of the air 23 and the fuel 24 goes to the cylinder hole 33 in the cylinder 31 to be ignited for combustion by the spark plug 41. Then, the gas as a result of combustion is exhausted, as emission 26, to outside of the internal combustion engine 6 via the exhaust path 38, the exhaust pipe 53 of the exhaust device 27, and the muffler 54 in this order. Thereafter, the internal combustion engine 6 continues its operation. The driving force of the internal combustion engine 6 is transferred to the driving rotation wheel 18 of the driving means 4 via the transmission 7 and the driveline equipment 8 in this order. In response thereto, the truck belt 20 is rotated, thereby allowing the snowmobile 1 to run.

With the above structure, the cylinder 31 is made extruded upward from the crankcase 30 towards the rear.

Accordingly, compared with a case of simply extruding the cylinder from the crankcase upward in the vertical direction, the center of gravity is lower in the internal combustion engine 6. In other words, the center of gravity of the snowmobile 1 becomes lower, and thereby, the stability of the snowmobile 1 is improved at the time of running.

As described in the above, the cylinder 31 is made extruded upward from the crankcase 30 towards the rear. Therefore, the center of the gravity of the internal combustion engine 6 is brought closer to the side of the driving means 4 locating therebehind. Thereby, the snowmobile 1 held by the driving means 4 is increased in weight to a greater degree.

This resultantly increases friction of the driving means 4 with respect to the running plane 3 at the time of running. Thus, the snowmobile 1 can suitably run according to the driving force output from the internal combustion engine 6, and the ride comfort of the snowmobile 1 can be accordingly improved.

The balancer shaft 42 is provided directly above the crankshaft 29.

Here, as already described in the foregoing, the cylinder 31 is extruding upward from the crankcase 30 towards the rear. Thus, there exists a redundant space above and towards the front of the front surface of the cylinder 31. Utilizing the redundant space directly above the crankshaft 29, the balancer shaft 42 is fitly placed. Placing the balancer shaft 42 directly above the crankshaft 29 in this way eliminates the need for lifting upward the heavy crankshaft 29, and the piston 34 and the interlock rod 35 connected thereto for the purpose of securing the space to be occupied by the balancer shaft 42.

Thus, even with the balancer shaft 42 provided, the center of the gravity remains low in the snowmobile 1, improving the stability of the snowmobile 1 when running.

As described above, in the snowmobile 1 in which the internal combustion engine 6 includes the carburetor 49 coupled to the cylinder 31 and the air cleaner 50, the carburetor 49 and the air cleaner 50 are provided above and towards the front of the front surface of the cylinder 31.

With such a structure, the redundant space above and towards the front of the front surface of the cylinder 31 described above is effectively utilized for placement of the carburetor 49 and the air cleaner 50 large in outer dimensions. This allows the compact placement of the cylinder 31, the carburetor 49, and the air cleaner 50.

Here, the air cleaner 50 is located above and towards the front of the cylinder 31. Thus, before heated by the cylinder 31, the running wind blown when the snowmobile 1 runs is sucked in to the cylinder 31 through the air cleaner 50. This is considered beneficial in terms of engine capability.

Further, it is desirable to improve, to a greater degree, the hold strength of the input shaft 60 of the transmission 7 with respect to the internal combustion engine 6. Thus, the input shaft 60 is not held by the free end extruding from the crankshaft 29 but is held in a cantilever manner directly by the crankcase 30.

Here, the crankcase 30 is the one retaining stronger strength and stiffness than the free end of the crankcase 29. Accordingly, the hold strength of the input shaft 60 with respect to the internal combustion engine 6 can be improved more without increasing the weight.

What is more, one end of the crankshaft 29 is interlocked with the base of the input shaft 60 via the damper 72.

With this structure, due to torque change occurring to the crankshaft 29, the impact to be provided from the crankshaft 29 to the input shaft 60 is decreased by the dumper 72. This damper 72 is generally light in weight because the main material thereof is the rubber-made buffer member 75. Accordingly, the hold strength of the input shaft 60 with respect to the internal combustion engine 6 can substantially be improved without increasing the weight. That is, the snowmobile 1 is successfully prevented from being increased in weight.

As described in the above, the damper 72 includes: the driving-side rotation body 73 rotating together with the crankshaft 29; the follower-side rotation body 74 formed on the base of the input shaft 60; and the buffer member 75 provided between the driving-side rotation body 73 and the follower-side rotation body 74 for transferring the driving force therebetween while buffering the same. The follower-side rotation body 74 is box-shaped so as to cover the driving-side rotation body 73 and the buffer member 75 from outside.

With such a simple structure, compared with a case of making the follower-side rotation body 74 simply a shaft-shaped, the strength and stiffness of the follower-side rotation body 74 formed on the base of the input shaft 60 are both increased. Thereby, the hold strength of the input shaft 60 with respect to the internal combustion engine 6 is increased to a greater degree without increasing the weight.

Further, as described above, both ends of the follower-side rotation body 74 are held by the crankcase 30.

Thus, with such a simple structure that both ends of the input shaft 60 are held at the bottom, the hold strength of the input shaft 60 with respect to the internal combustion engine 6 can be improved more without increasing the weight.

Moreover, as already described in the foregoing, the internal combustion engine 6 includes the water pump 109 for supplying the cool water 106 to the water jacket 108 of the cylinder 31 through interlock with the balancer shaft 42, and the water pump 109 is placed above the crankshaft 29.

As described in the foregoing, the cylinder 31 is extruding upward from the crankcase 30 towards the rear. Thus, there exists a redundant space above and towards the front of the front surface of the cylinder 31. Utilizing the redundant space above the crankshaft 29, the water pump 109 is fitly placed. Placing the water pump 109 above the crankshaft 29 in the way eliminates the need for lifting upward the heavy crankshaft 29, and the piston 34 and the interlock rod 35 connected thereto for the purpose of securing the space to be occupied by the water pump 109.

Thus, even with the water pump 109 provided, the center of the gravity remains low in the snowmobile 1, improving the stability of the snowmobile 1 when running.

In the above case, the water pump 109 and a water hose for leading the cooling water 106 discharged from the water pump 109 to a predetermined position of the cylinder 31, for example, are provided on one side of the internal combustion engine 6 in the lateral direction of the vehicle body 2.

Accordingly, maintenance and check operations with respect to the cooling water 106 and the water hose can be done utilizing a wide work area on the outer side of the snowmobile 1, making the operations easier.

Moreover, as described in the foregoing, the rear parts at least partially structuring the air cleaner 50 and the battery 115, respectively, are provided above the front surface of the cylinder 31. Also, the battery 115 is placed towards the front of the front surface of the cylinder 31, and below the air cleaner 50.

With such a structure, the redundant space locating above and towards the front of the front surface of the cylinder 31, and below the air cleaner 50 large in outer dimensions is utilized for the placement of the battery 115. This allows the compact placement of the cylinder 31, the air cleaner 50, and the battery 115.

Here, the battery 115 is located towards the front of the cylinder 31. Thus, the running wind blown when the snowmobile 1 runs can reach more directly the battery 115 without being blocked by the cylinder 31, thereby effectively cooling the battery 115.

Thanks thereto, although getting easily high in temperature, the battery 115 is prevented from being high in temperature. This is considered beneficial to keep the performance of the battery 115.

Note here that, the above description is based on the shown example. However, the regulatory wall 87 may be plurally provided, and the oil pump 90 may be singularly provided.

As explained above, effects achieved by the present invention are as follows.

In a snowmobile comprising: driving means placed on a running surface while being held by a rear part of a vehicle body for making, by rotating, the vehicle body capable of running; an orientation ski placed on the running surface while being orientably supported by a front part of the vehicle body for making, by orienting, the vehicle body orientable; and a for-driving four-cycle internal combustion engine held by a middle part of the fore-and-aft length of the vehicle body and interlocked with the driving means, and the internal combustion engine being provided with a crankcase held by the vehicle body for supporting a crankshaft, a cylinder extruding from this crank case, and a balancer shaft supported by the crankcase and interlocked with the crankshaft, the cylinder is extruded upward from the crankcase towards the rear.

Accordingly, compared with a case of simply extruding the cylinder from the crankcase upward in the vertical direction, the center of gravity is lower in the internal combustion engine. In other words, the center of gravity of the snowmobile becomes lower, and thereby, the stability of the snowmobile is improved when running.

As described in the above, the cylinder is made extruded upward from the crankcase towards the rear. Therefore, the center of the gravity is brought closer to the side of the driving means locating behind the internal combustion engine. Thereby, the snowmobile held by the driving means is increased in weight to a greater degree.

This resultantly increases friction of the driving means with respect to the running plane at the time of running. Thus, the snowmobile can suitably run according to the driving force output from the internal combustion engine, and the ride comfort of the snowmobile can be accordingly improved.

The balancer shaft is provided directly above the crankshaft.

Here, as already described in the foregoing, the cylinder is made extruded upward from the crankcase towards the rear. Thus, there exists a redundant space above and towards the front of the front surface of the cylinder. Utilizing the redundant space directly above the crankshaft is described above, the balancer shaft is fitly placed. Placing the balancer shaft directly above the crankshaft in this way eliminates the need to lift upward the heavy crankshaft, and the piston and the interlock rod connected thereto for the purpose of securing the space to be occupied by the balancer shaft.

Thus, even with the balancer shaft provided, the center of the gravity remains low in the snowmobile, improving the stability of the snowmobile 1 when running.

As explained, in the snowmobile in which the internal combustion engine includes an air cleaner to be interlocked with the cylinder, the air cleaner is placed above and towards the front of the front surface of the cylinder.

With such a structure, the redundant space above and towards the front of the front surface of the cylinder described above is effectively utilized for placement of the air cleaner large in outer dimensions. This allows the compact placement of the cylinder and the air cleaner.

Here, the air cleaner is located above and towards the front of the cylinder. Thus, before heated by the cylinder, the running wind blown when the snowmobile runs is sucked in to the cylinder through the air cleaner. This is considered beneficial in terms of engine performance.

Further, the internal combustion engine includes a water pump interlocked with the balancer shaft for supplying cooling water to a water jacket of the cylinder, and the water pump is placed above the crankshaft.

Here, as already described in the foregoing, the cylinder is made extruded upward from the crankcase towards the rear. Thus, there exists a redundant space above and towards the front of the front surface of the cylinder. As described above, utilizing the redundant space above the crankshaft, the water pump is fitly placed. Placing the water pump above the crankshaft in this way eliminates the need to lift upward the heavy crankshaft, and the piston and the interlock rod connected thereto for the purpose of securing the space to be occupied by the water pump.

Thus, even with the water pump provided, the center of the gravity remains low in the snowmobile, improving the stability of the snowmobile when running.

Moreover, a battery is placed above the cylinder, and below of the air cleaner.

With such a structure, the redundant space towards the front of the front surface of the cylinder, and below the air cleaner large in outer dimensions is effectively utilized for placement of the battery. This allows the compact placement of the cylinder, the air cleaner, and the battery.

Here, the battery is located towards the front of the cylinder. Thus, the running wind blown when the snowmobile runs can reach more directly the battery without being blocked by the cylinder, thereby effectively cooling the battery.

Thanks thereto, although getting easily high in temperature, the battery itself is prevented from being high in temperature. This is considered beneficial to keep the performance of the battery.

As described before, in order to improve the snowmobile's stability and the ride comfort at the time of running by bringing its center of gravity lower and to place components of an internal combustion engine in a compact manner without losing their each function, it is proposed that a snowmobile 1 includes: driving means 4 held by the rear part of a vehicle body 2; an orientation ski 5 supported by the front part of the vehicle body 2; and a for-driving four-cycle internal combustion engine 6 held by a middle section of the fore-and-aft length of the vehicle body 2. The internal combustion engine 6 is provided with a crankcase 30 held by the vehicle body for supporting a crankshaft 29, a cylinder 31 extruding from this crankcase 30, and a balancer shaft 42 supported by the crankcase 30 and interlocked with the crankshaft 29. The cylinder 31 is extruded upward from the crankcase 30 toward the rear. The balancer shaft 42 is provided directly above the crankshaft 29.

## Claims

1. Snowmobile (1) comprising a vehicle body (2) holding a driving means (4) placeable on a running surface (3) and an internal combustion engine (6) interlocked with the driving means (4), wherein the internal combustion engine (6) is provided with a crankcase (30) for supporting a crankshaft (29) and a cylinder (31) which extends from this crankcase (30) inclined rearwardly with respect to a drive direction of the snowmobile,
**characterized in that**
a balancer shaft (42) is supported by the crankcase (30) directly above the crankshaft (29) and interlocked with the crankshaft (29) by a gear type interlocking means (43).

2. Snowmobile according to claim 1, **characterized in that** a water pump (109) for supplying cooling water (106) to a water jacket (108) of said cylinder (31) is provided above said crankshaft (29).

3. Snowmobile according to claim 2, **characterized in that** the water pump (109) is interlocked with said balancer shaft (42) by a gear type interlocking means (110) such that the water pump (109) moves cooperatively with the balancer shaft (42).

4. Snowmobile according to at least one of the claims 1 to 3, **characterized in that** the internal combustion engine (6) includes an air cleaner (50) to be interlocked with said cylinder (31), wherein said air cleaner (50) is provided toward, above, or front of a front surface of said cylinder (31).

5. Snowmobile according to at least one of the claims 1 to 4, **characterized in that** a startup device (44) is provided for enabling the engine (6) to start though interlock with the crankshaft (29) by a gear type interlocking means (46).

6. Snowmobile according to at least one of the claims 1 to 5, **characterized in that** a battery (115) is provided towards the front of the front surface of said cylinder (31) and below the air cleaner (50).

7. Snowmobile according to at least one of the claims 1 to 6, **characterized in that** the driving means (4) is held at a rear part of the vehicle body (2), at least one orientation ski (5) is held at a front part of the vehicle body (2), and the engine (6) is held at a middle part of the fore- and aft-length of the vehicle body (2).

8. Snowmobile according to at least one of the claims 1 to 7, **characterized in that** a heat exchanger (111) is provided in proximity of the rear part of the crankcase (3).

## Patentansprüche

1. Schneemobil (1), aufweisend eine Fahrzeugkarosserie (2), die eine Antriebseinrichtung (4), platzierbar auf einer Laufoberfläche (3), und eine Brennkraftmaschine (6), in Eingriff mit der Antriebseinrichtung (4), hält, wobei die Brennkraftmaschine (6) mit einem Kurbelgehäuse (30) zum Lagern einer Kurbelwelle (29) und einem Zylinder (31) versehen ist, der sich von diesem Kurbelgehäuse (30) nach hinten geneigt in Bezug auf eine Fahrrichtung des Schneemobiles erstreckt,
**dadurch gekennzeichnet, dass**
eine Ausgleichswelle (42) durch das Kurbelgehäuse (30) direkt oberhalb der Kurbelwelle (29) gelagert ist und mit der Kurbelwelle (29) durch eine Eingriffseinrichtung (43) vom Zahnradtyp verriegelt ist.

2. Schneemobil nach Anspruch 1, **dadurch gekennzeichnet, dass** eine Wasserpumpe (109) zum Zuführen von Kühlwasser (106) in einen Wassermantel (108) des Zylinders (31) oberhalb der Kurbelwelle (29) vorgesehen ist.

3. Schneemobil nach Anspruch 2, **dadurch gekennzeichnet, dass** die Wasserpumpe (109) mit der Ausgleichswelle (42) durch eine Eingriffseinrichtung (110) der Zahnradart derart im Eingriff ist, dass sich die Wasserpumpe (109) im Zusammenwirken mit der Ausgleichswelle (42) bewegt.

4. Schneemobil nach zumindest einem der Ansprüche 1 bis 3, **dadurch gekennzeichnet, dass** die Brennkraftmaschine (6), einen Luftfilter (50) enthält, der mit dem Zylinder (31) im Eingriff ist, wobei der Luftfilter (50) in der Richtung zu, oberhalb oder vor einer Vorderseite des Zylinders (31) vorgesehen ist.

5. Schneemobil nach zumindest einem der Ansprüche 1 bis 4, **dadurch gekennzeichnet, dass** eine Startvorrichtung (44) vorgesehen ist, um dem Motor (6) zu ermöglichen, durch Eingriff mit der Kurbelwelle (29) durch eine Eingriffseinrichtung (46) vom Zahnradtyp zu starten.

6. Schneemobil nach zumindest einem der Ansprüche 1 bis 5, **dadurch gekennzeichnet, dass** eine Batterie (115) in der Richtung zu der Vorderseite der Vorderfläche des Zylinders (31) und unter dem Luftfilter (50) vorgesehen ist.

7. Schneemobil nach zumindest einem der Ansprüche 1 bis 6, **dadurch gekennzeichnet, dass** die Antriebseinrichtung (4) an einem hinteren Teil der Fahrzeugkarosserie (2) gehalten wird, zumindest ein Richtungsski (5) an einem vorderen Teil der Fahrzeugkarosserie (2) gehalten wird und der Motor (6) an einem mittleren Teil der Längsrichtungslänge der Fahrzeugkarosserie (2)gehalten wird.

8. Schneemobil nach zumindest einem der Ansprüche 1 bis 7, **dadurch gekennzeichnet, dass** ein Wärmetauscher (111) in der Nähe des hinteren Teiles des Kurbelgehäuses (30) vorgesehen ist.

## Revendications

1. Motoneige (1) comprenant un corps de véhicule (2) supportant des moyens d'entraînement (4) pouvant être placés sur une surface d'avancement (3) et un moteur à combustion interne (6) en engagement avec les moyens d'entraînement (4), dans laquelle le moteur à combustion interne (6) comporte un carter moteur (30) destiné à supporter un vilebrequin (29) et un cylindre (31) qui s'étend à partir de ce carter moteur (30) en inclinaison vers l'arrière par rapport à une direction d'entraînement de la motoneige,
**caractérisée en ce que** :
un arbre d'équilibrage (42) est supporté par le carter moteur (30) directement au-dessus du vilebrequin (29) et en engagement avec le vilebrequin (29) grâce à des moyens d'engagement de type à engrenage (43).

2. Motoneige selon la revendication 1, **caractérisée en ce qu'**une pompe à eau (109) destinée à fournir de l'eau de refroidissement (106) à une chemise à eau (108) dudit cylindre (31) est disposée au-dessus dudit vilebrequin (29).

3. Motoneige selon la revendication 2, **caractérisée en ce que** la pompe à eau (109) est en engagement avec ledit arbre d'équilibrage (42) par l'intermédiaire de moyens d'engagement de type à engrenage (110) de telle sorte que la pompe à eau (109) se déplace en coopération avec l'arbre d'équilibrage (42).

4. Motoneige selon au moins l'une des revendications 1 à 3, **caractérisée en ce que** le moteur à combustion interne (6) comprend un filtre à air (50) qui est en engagement avec ledit cylindre (31), dans laquelle ledit filtre à air (50) est disposé vers le dessus, ou à l'avant d'une surface avant dudit cylindre (31).

5. Motoneige selon au moins l'une des revendications 1 à 4, **caractérisée en ce qu'**un dispositif de mise en marche (44) est fourni afin de permettre la mise en marche du moteur (6) malgré un engagement du vilebrequin (29) par des moyens d'engagement de type à engrenage (46).

6. Motoneige selon au moins l'une des revendications 1 à 5, **caractérisée en ce qu'**une batterie (115) est disposée vers l'avant de la surface avant dudit cylindre (31) et en dessous du filtre à air (50).

7. Motoneige selon au moins l'une des revendications 1 à 6, **caractérisée en ce que** les moyens d'entraînement (4) sont supportés sur une partie arrière du corps de véhicule (2), au moins un ski d'orientation (5) est supporté sur une partie avant du corps de véhicule (2), et le moteur (6) est supporté dans une partie intermédiaire de la longueur longitudinale du corps de véhicule (2).

8. Motoneige selon au moins l'une des revendications 1 à 7, **caractérisée en ce qu'**un échangeur de chaleur (111) est disposé à proximité de la partie arrière du carter moteur (3).
